(19) Europäisches Patentamt
European Patent Office
Office européen des brevets

(11) **EP 3 179 382 A1**

(12) **EUROPEAN PATENT APPLICATION**
published in accordance with Art. 153(4) EPC

(43) Date of publication:
**14.06.2017 Bulletin 2017/24**

(51) Int Cl.:
***G06F 17/30*** (2006.01)

(21) Application number: **15836802.7**

(22) Date of filing: **12.02.2015**

(86) International application number:
**PCT/CN2015/072915**

(87) International publication number:
**WO 2016/029664 (03.03.2016 Gazette 2016/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.08.2014 CN 201410431085**

(71) Applicant: **Huawei Technologies Co., Ltd.
Longgang District
Shenzhen, Guangdong 518129 (CN)**

(72) Inventors:
• **ZHANG, Yansong
Beijing 100872 (CN)**
• **CHEN, Hong
Beijing 100872 (CN)**
• **LI, Cuiping
Beijing 100872 (CN)**
• **SUN, Dongwang
Shenzhen
Guangdong 518129 (CN)**

(74) Representative: **Epping - Hermann - Fischer
Patentanwaltsgesellschaft mbH
Schloßschmidstraße 5
80639 München (DE)**

(54) **TWO-DIMENSIONAL FILTER GENERATION METHOD, QUERY METHOD AND DEVICE**

(57)  The present invention discloses a generation method, a query method, and an apparatus of a two-dimensional filter. In this solution, a two-dimensional filter includes a two-dimensional matrix, where the two-dimensional matrix may be linked to multiple key value element groups, and therefore flexibility of the filter is improved. Further, when it is queried whether a key value element is a key value element included in multiple key value element groups, it only needs to perform a query based on the two-dimensional filter, and it does not need to generate a Bloom filter corresponding to each key value element group. In addition, when it is queried whether a key value element is a key value element included in multiple key value element groups, it does not need to perform queries one by one based on each of multiple Bloom filters. Therefore, a problem of low query efficiency currently is further resolved.

```
┌─────────────────────────────────────────────────┐
│ Establish a two-dimensional matrix that includes │ ╮ 200
│ at least two row vectors and at least two column │ ╯
│ vectors                                          │
└─────────────────────────────────────────────────┘
                        │
                        ▼
┌─────────────────────────────────────────────────┐
│ Determine a hash function set, where each hash   │
│ function in the hash function set is             │
│ corresponding to at least one key value element  │
│ group; and obtain a first hash value by          │
│ performing hash calculation on a first sub key    │ ╮ 210
│ value element of any key value element in at      │ ╯
│ least one corresponding key value element group  │
│ by using any hash function in the hash function  │
│ set, and obtain a second hash value by performing│
│ hash calculation on a second sub key value       │
│ element of any key value element in the          │
│ corresponding key value element group, where each│
│ first hash value is a positive integer that is   │
│ less than or equal to a length of the row        │
│ vectors, and each second hash value is a positive│
│ integer that is less than or equal to a length of│
│ the column vectors                               │
└─────────────────────────────────────────────────┘
                        │
                        ▼
┌─────────────────────────────────────────────────┐
│ Generate a multidimensional filter that includes │ ╮ 220
│ the two-dimensional matrix and the hash function │ ╯
│ set                                              │
└─────────────────────────────────────────────────┘
```

FIG. 2A

Printed by Jouve, 75001 PARIS (FR)

EP 3 179 382 A1

## Description

## TECHNICAL FIELD

The present invention relates to the field of element querying and matching technologies, and in particular, to generation and query methods and apparatuses of a two-dimensional filter.

## BACKGROUND

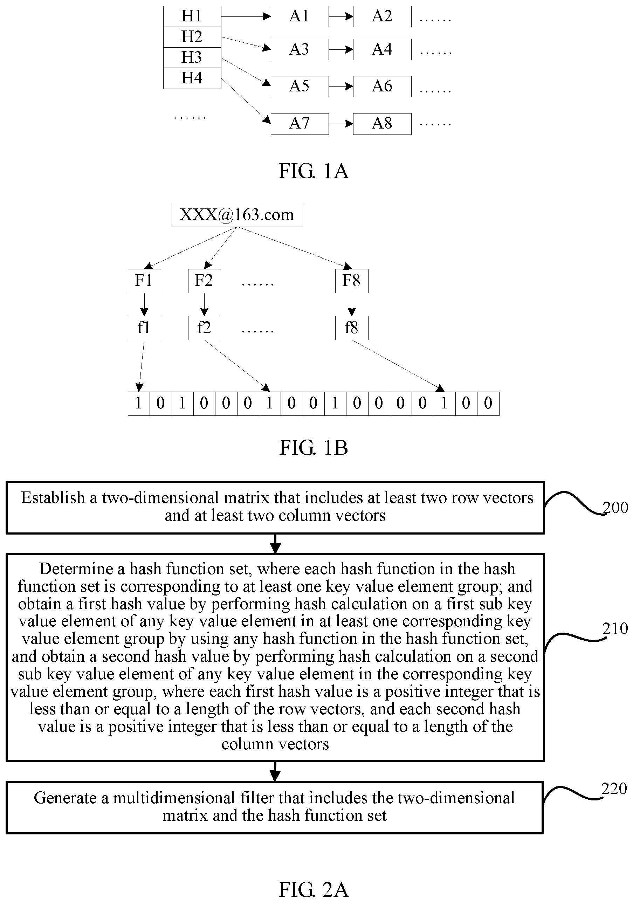

When computer software is being designed, it usually needs to determine whether an element is in a set. For example, in word processing software, it needs to check whether an English word is spelled correctly (that is, it is required to determine whether the English word is in a known dictionary); for another example, in URL (Universal Resource Locator, uniform resource locator) filtering software, it is determined whether a URL is in a filtering list. The most direct method is: storing all elements in a set into a computer, and when there appears a new element, directly comparing the new element with the elements in the set. In order to improve a searching speed, a hash table (Hash Table) is generally used to store a set. A hash table is a data structure for quickly mapping a storage location of an element according to a key code value of the element, where a mapping function is a so-called hash function. A structure of a hash table is shown in FIG. 1A. First, a hash location of an element in a set is obtained by using a hash function, and then, the element is recorded in a hash linked list at the location. In FIG. 1A, it is assumed that the hash function is HASH, and A1, A2, ..., and A8 are elements in the set; then, it can be seen from the diagram that HASH (A1) = HASH (A2) = H1, HASH (A3) = HASH (A4) = H2, HASH (A5) = HASH (A6) = H3, and HASH (A7) = HASH (A8) = H4.

An advantage of a hash table is that it can be quickly and accurately determined whether an element is in a set, and a disadvantage is that relatively large storage space is required. In order to reduce storage space, a one-dimensional Bloom filter is put forward by Burton Bloom in 1970, and a principle of the Bloom filter is as follows: a one-dimensional Bloom filter is formed by K hash functions h1, h2, ..., and hk that are mutually independent, and a bit vector whose length is m. A value range of each hash function is {0, 1, ..., m-1}, and one byte has eight bits. Therefore, memory space actually occupied by the bit vector is m/8 bytes, and all bits of the bit vector are initialized to 0. Set S = {s1, s2, ..., sn}, a hash sequence (h1(s), h2(s), ..., hk(s)) is calculated for each element in set S by using k hash functions, and then a corresponding hash sequence bit in the bit vector is set to 1; then, it is referred to that data element set S is loaded into the Bloom filter, or the Bloom filter represents data element set S. For example, if h1(s1)=5, the 6th bit of the bit vector is set to 1; if h2(s1)=10, the 11th bit of the bit vector is set to 1; and until hk(s1)=n-1, the nth bit of the bit vector is set to 1; then, it is referred to that data element s1 is loaded into the Bloom filter. When all data elements in set S are loaded into the Bloom filter, it is referred to that the Bloom filter represents data element set S. When it is queried whether a data element is in set S, a hash sequence is calculated for the data element by using the same k hash functions. If each bit of a bit vector corresponding to the hash sequence is 1, it is considered that the data element belongs to S; otherwise, it is considered that the data element does not belong to S. Compared with that data is completely stored, the Bloom filter can be used to reduce storage space, and any element that belongs to a set may never be missed if the Bloom filter is used.

In the following, a Bloom filter is briefly described with reference to an example of a junk Email address.

It is assumed that a quantity of junk Email addresses is one hundred million; first, a bit vector whose length is 1.6 billion bits, that is, a vector of two hundred million bytes, is established, and then, all the 1.6 billion binary bits are initialized to 0. For each known junk Email address, eight different hash functions (F1, F2, ..., and F8) are used to generate eight hash values (f1, f2, ..., and f8), and locations that are of the bit vector and corresponding to the eight hash values are all set to 1. After all the one hundred million junk Email addresses are processed in such a way, a Bloom filter is generated for these junk Email addresses. As shown in FIG. 1B, FIG. 1B is an exemplary diagram of a junk Email address represented by using the Bloom filter. For a junk Email address XXX@163.com, eight different hash functions (F1, F2, ..., and F8) are used to generate eight hash values (f1 f2, ..., and f8), and locations that are of the bit vector and corresponding to the eight hash values are all set to 1; in this case, it is referred to that the junk Email address is loaded into the Bloom filter.

The foregoing generated Bloom filter is for one key value element group, that is, one Bloom filter can be linked to only one key value element group, and a quantity of Bloom filters that need to be generated depends on a quantity of key value element groups. Therefore, there exists a deficiency that flexibility of the Bloom filter is relatively poor.

## SUMMARY

Embodiments of the present invention provide generation and query methods and apparatuses of a two-dimensional filter, so as to improve flexibility of a Bloom filter.

Specific technical solutions provided in the embodiments of the present invention are as follows:

According to a first aspect, a method for querying a key value element is provided, including:

determining, from a hash function set, a hash function subset corresponding to each key value element group;
for any key value element in each key value element group, calculating a hash value according to a hash function subset corresponding to a key value element group to which the key value element belongs, and setting an element corresponding to a location that is of the calculated hash value and in a two-dimensional matrix to a second preset identifier;
for a to-be-queried key value element, determining a hash function subset corresponding to a key value element group to which the to-be-queried key value element belongs, and calculating a hash value of the to-be-queried key value element according to the corresponding hash function subset;
acquiring an element corresponding to a location that is of the hash value of the to-be-queried key value element and in the two-dimensional matrix; and
when the acquired element is a second preset identifier corresponding to the location that is of the hash value of the to-be-queried key value element and in the two-dimensional matrix, determining that the to-be-queried key value element belongs to a key value element set represented by a two-dimensional filter.

With reference to the first aspect, in a first possible implementation manner of the first aspect, hash functions included in hash function subsets respectively corresponding to any two different key value element groups are different; or
hash functions included in hash function subsets respectively corresponding to any two different key value element groups are the same, but the hash functions differ in an arrangement manner.

With reference to the first aspect or the first possible implementation manner of the first aspect, in a second possible implementation manner of the first aspect, the calculating a hash value of the to-be-queried key value element specifically includes:

obtaining a first hash value by performing calculation on a first sub key value element of the to-be-queried key value element based on the hash function subset corresponding to the key value element group to which the to-be-queried key value element belongs; and
obtaining a second hash value by performing calculation on a second sub key value element of the to-be-queried key value element based on the hash function subset corresponding to the key value element group to which the to-be-queried key value element belongs.

With reference to the second possible implementation manner of the first aspect, in a third possible implementation manner of the first aspect, the acquiring an element corresponding to a location that is of the hash value of the to-be-queried key value element and in the two-dimensional matrix specifically includes:

acquiring, from the two-dimensional matrix, an element that uses the first hash value as a row and uses the second hash value as a column; or acquiring, from the two-dimensional matrix, an element that uses the second hash value as a row and uses the first hash value as a column.

According to a second aspect, a method for generating a two-dimensional filter is provided, including:

establishing a two-dimensional matrix that includes at least two row vectors and at least two column vectors;
determining a hash function set, where each hash function in the hash function set is corresponding to at least one key value element group; and obtaining a first hash value by performing hash calculation on a first sub key value element of any key value element in at least one corresponding key value element group by using any hash function in the hash function set, and obtaining a second hash value by performing hash calculation on a second sub key value element of the any key value element, where the first hash value is a positive integer that is less than or equal to a length of the row vectors, and the second hash value is a positive integer that is less than or equal to a length of the column vectors; and
generating a two-dimensional filter that includes the two-dimensional matrix and the hash function set.

With reference to the second aspect, in a first possible implementation manner of the second aspect, both the length of the row vectors and the length of the column vectors are greater than or equal to $\sqrt{Sr}$, where

Sr is a quantity of all key value elements included in all key value element groups; or Sr is a quantity of key value elements obtained after all key value elements included in all key value element groups are filtered by using a query condition.

With reference to the second aspect or the first possible implementation manner of the second aspect, in a second possible implementation manner of the second aspect, the first sub key value element includes a key value element formed by all odd bits of the any key value element when the any key value element is represented in binary, and the second sub key value element includes a key value element formed by all even bits of the any key value element when the any key value element is represented in binary; or

the first sub key value element includes a key value element formed by the 1st bit to the Kth bit of the any key value element when the any key value element is represented in binary, and the second sub key value element includes a key value element formed by the (K+1)th bit to the Nth bit of the any key value element when the any key value element is represented in binary, where N is a quantity of bits of the any key value element when the any key value element is represented in binary, $1 \leq K \leq N$, and K is a positive integer.

With reference to the second aspect or the first to the second possible implementation manner of the second aspect, in a third possible implementation manner of the second aspect, the method further includes:

initializing an element determined by any row vector and any column vector that are in the two-dimensional matrix to a first preset identifier.

According to a third aspect, an apparatus for querying a key value element is provided, including:

a determining unit, configured to determine, from a hash function set, a hash function subset corresponding to each key value element group;

a setting unit, configured to: for any key value element in each key value element group, calculate a hash value according to a hash function subset corresponding to a key value element group to which the key value element belongs, and set an element corresponding to a location that is of the calculated hash value and in a two-dimensional matrix to a second preset identifier;

a calculating unit, configured to: for a to-be-queried key value element, determine a hash function subset corresponding to a key value element group to which the to-be-queried key value element belongs, and calculate a hash value of the to-be-queried key value element according to the corresponding hash function subset;

an acquiring unit, configured to acquire an element corresponding to a location that is of the hash value of the to-be-queried key value element group and in the two-dimensional matrix; and

a querying unit, configured to: when the acquired element is a second preset identifier corresponding to the location that is of the hash value of the to-be-queried key value element and in the two-dimensional matrix, determine that the to-be-queried key value element belongs to a key value element set represented by a two-dimensional filter.

With reference to the third aspect, in a first possible implementation manner of the third aspect, hash functions included in hash function subsets that are respectively corresponding to any two different key value element groups and determined by the determining unit are different; or

hash functions included in hash function subsets that are respectively corresponding to any two different key value element groups and determined by the determining unit are the same, but the hash functions differ in an arrangement manner.

With reference to the third aspect or the first possible implementation manner of the third aspect, in a second possible implementation manner of the third aspect, the calculating unit is specifically configured to:

obtain a first hash value by performing calculation on a first sub key value element of the to-be-queried key value element based on the hash function subset corresponding to the key value element group to which the to-be-queried key value element belongs; and

obtain a second hash value by performing calculation on a second sub key value element of the to-be-queried key value element based on the hash function subset corresponding to the key value element group to which the to-be-queried key value element belongs.

With reference to the second possible implementation manner of the third aspect, in a third possible implementation manner of the third aspect, the acquiring unit is specifically configured to:

acquire, from the two-dimensional matrix, an element that uses the first hash value as a row and uses the second hash value as a column; or acquire, from the two-dimensional matrix, an element that uses the second hash value as a row and uses the first hash value as a column.

According to a fourth aspect, an apparatus for generating a two-dimensional filter is provided, including:

an establishing unit, configured to establish a two-dimensional matrix that includes at least two row vectors and at least two column vectors;

a determining unit, configured to determine a hash function set, where each hash function in the hash function set is corresponding to at least one key value element group; and obtain a first hash value by performing hash calculation on a first sub key value element of any key value element in at least one corresponding key value element group by using any hash function in the hash function set, and obtain a second hash value by performing hash calculation on a second sub key value element of the any key value element, where the first hash value is a positive integer that is less than or equal to a length of the row vectors, and the second hash value is a positive integer that is less than or equal to a length of the column vectors; and

a generating unit, configured to generate a two-dimensional filter that includes the two-dimensional matrix and the hash function set.

With reference to the fourth aspect, in a first possible implementation manner of the fourth aspect, both the length of the row vectors and the length of the column vectors are greater than or equal to $\sqrt{Sr}$,
where the row vectors and the column vectors are included in the two-dimensional matrix generated by the establishing unit; where
Sr is a quantity of all key value elements included in all key value element groups; or Sr is a quantity of key value elements obtained after all key value elements included in all key value element groups are filtered by using a query condition.

With reference to the fourth aspect or the first possible implementation manner of the fourth aspect, in a second possible implementation manner of the fourth aspect, the first sub key value element obtained by the determining unit includes a key value element formed by all odd bits of the any key value element when the any key value element is represented in binary, and the second sub key value element obtained by the determining unit includes a key value element formed by all even bits of the any key value element when the any key value element is represented in binary; or
the first sub key value element obtained by the determining unit includes a key value element formed by the 1st bit to the K<sup>th</sup> bit of the any key value element when the any key value element is represented in binary, and the second sub key value element obtained by the determining unit includes a key value element formed by the (K+1)<sup>th</sup> bit to the N<sup>th</sup> bit of the any key value element when the any key value element is represented in binary, where N is a quantity of bits of the any key value element when the any key value element is represented in binary, $1 \leq K \leq N$, and K is a positive integer.

With reference to the fourth aspect or the first to the second possible implementation manner of the fourth aspect, in a third possible implementation manner of the fourth aspect, the apparatus further includes an initializing unit, configured to initialize an element determined by any row vector and any column vector that are in the two-dimensional matrix to a first preset identifier.

In the embodiments of the present invention, a two-dimensional filter includes a two-dimensional matrix, where the two-dimensional matrix may be linked to multiple key value element groups, and therefore flexibility of the filter is improved.

## BRIEF DESCRIPTION OF DRAWINGS

FIG. 1A is a schematic structural diagram of a hash table in the prior art;
FIG. 1B is an exemplary diagram of a junk Email address represented by using a filter in the prior art;
FIG. 2A is a flowchart of generating a two-dimensional filter according to an embodiment of the present invention;
FIG. 2B is a schematic diagram of a two-dimensional matrix according to an embodiment of the present invention;
FIG. 3 is a flowchart of querying a key value element according to an embodiment of the present invention;
FIG. 4 is an embodiment of generating a two-dimensional filter and querying a key value element according to an embodiment of the present invention;
FIG. 5 is a schematic diagram of a functional structure of an apparatus for generating a two-dimensional filter according to an embodiment of the present invention;
FIG. 6 is a schematic diagram of an entity structure of an apparatus for generating a two-dimensional filter according to an embodiment of the present invention;
FIG. 7 is a schematic diagram of a functional structure of an apparatus for querying a key value element according to an embodiment of the present invention; and
FIG. 8 is a schematic diagram of an entity structure of an apparatus for querying a key value element according to an embodiment of the present invention.

## DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

In the following, exemplary implementation manners of the present invention are described in detail with reference to the accompanying drawings. It should be understood that the exemplary embodiments described herein are merely used to illustrate and explain the present invention, but are not intended to limit the present invention. In addition, the embodiments of the present application and features in the embodiments may be mutually combined in a case in which they do not conflict with each other.

In the following, the exemplary implementation manners of the present invention are described in detail with reference to the accompanying drawings.

## Embodiment 1

Referring to FIG. 2A, in this embodiment of the present invention, a detailed process of generating a two-dimensional filter is as follows:

Step 200: Establish a two-dimensional matrix that includes at least two row vectors and at least two column vectors.

Step 210: Determine a hash function set, where each hash function in the hash function set is corresponding to at least one key value element group; and obtain a first hash value by performing hash calculation on a first sub key value element of any key value element in at least one corresponding key value element group by using any hash function in the hash function set, and obtain a second hash value by performing hash calculation on a second sub key value element of any key value element in the corresponding key value element group, where each first hash value is a positive integer that is less than or equal to a length of the row vectors, and each second hash value is a positive integer that is less than or equal to a length of the column vectors.

Step 220: Generate a two-dimensional filter that includes the two-dimensional matrix and the hash function set.

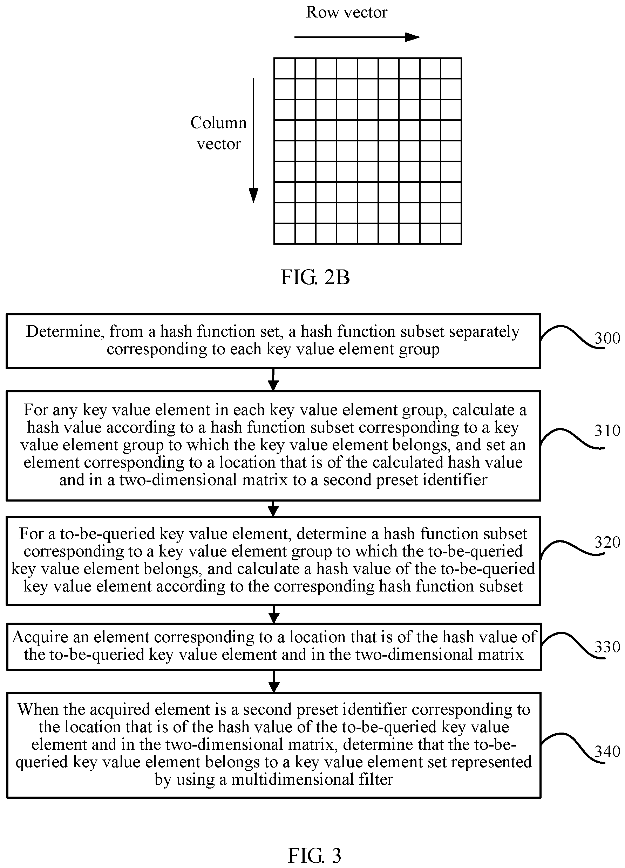

In this embodiment of the present invention, the two-dimensional matrix is shown in FIG. 2B.

In this embodiment of the present invention, a quantity of storage data units of the two-dimensional matrix is a product of a quantity of row vectors and a quantity of column vectors. As shown in FIG. 2B, in the two-dimensional matrix, the quantity of row vectors is 9, and the quantity of column vectors is 9; then, the quantity of storage data units of the two-dimensional matrix is 81.

In this embodiment of the present invention, if both the length of the row vectors of the established two-dimensional matrix and the length of the column vectors of the established two-dimensional matrix are less than $\sqrt{Sr}$, when key value elements in a key value element group are loaded into a filter, there is a high probability that different key value elements are loaded at a same location, thereby affecting query accuracy. Therefore, in order to improve query accuracy, in this embodiment of the present invention, both the length of the row vectors of the established two-dimensional matrix and the length of the column vectors of the established two-dimensional matrix are greater than $\sqrt{Sr}$, where Sr is a quantity of all key value elements included in all key value element groups; or Sr is a quantity of key value elements obtained after all key value elements included in all key value element groups are filtered by using a query condition.

However, if the length of the row vectors and the length of the column vectors are larger, larger storage space is required. Therefore, in this embodiment of the present invention, in order to improve a utilization rate of storage space, both the length of the row vectors of the established two-dimensional matrix and the length of the column vectors of the established two-dimensional matrix are equal to $\sqrt{Sr}$.

In this embodiment of the present invention, a first key value element and a second key value element may be in various forms. Optionally, the following several forms may be used:

The first sub key value element includes a key value element formed by all odd bits of any key value element when the any key value element is represented in binary, and the second sub key value element includes a key value element formed by all even bits of any key value element when the any key value element is represented in binary.

The key value element formed by all the odd bits may be in decimal, and the key value element formed by all the even bits may be in decimal. Certainly, the key value element formed by all the odd bits and the key value element formed by all the even bits may also be in another number system, and details are not described herein again.

For example, a key value element is 37348, and when represented in binary, 37348 is 1001000111100100; all odd bits are 01011010, and all even bits are 10001100; a decimal number represented by all the odd bits is 90 (a first sub key value element), and a decimal number represented by all the even bits is 140 (a second sub key value element).

Alternatively, the first sub key value element and the second sub key value element may also be in the following form:

The first sub key value element includes a key value element formed by the $1^{st}$ bit to the $K^{th}$ bit of any key value element when the any key value element is represented in binary, and the second sub key value element includes a key value element formed by the $(K+1)^{th}$ bit to the $N^{th}$ bit of any key value element when the any key value element is represented in binary, where N is a quantity of bits of any key value element when the any key value element is represented in binary, $1 \leq K \leq N$, and K is a positive integer.

The key value element formed by all the odd bits may be in decimal, and the key value element formed by all the even bits may be in decimal. Certainly, the key value element formed by all the odd bits and the key value element formed by all the even bits may also be in another number system, and details are not described herein again.

For example, a key value element is 37348, and when represented in binary, 37348 is 1001000111100100; the $0^{th}$ bit to the $7^{th}$ bit are 10010001, and the $8^{th}$ bit to the $15^{th}$ bit are 11100100; a decimal number represented by the $0^{th}$ bit to the $7^{th}$ bit is 90 (a first sub key value element), and a decimal number represented by the $8^{th}$ bit to the $15^{th}$ bit is 140 (a second sub key value element).

In this embodiment of the present invention, after a two-dimensional matrix that includes a row vector and a column vector is established, the process further includes: initiating an element determined by any row vector and any column vector that are in the two-dimensional matrix to a first preset identifier.

**Embodiment 2**

Referring to FIG. 3, in this embodiment of the present invention, a detailed process of querying a key value element by using the two-dimensional filter generated in FIG. 2 is as follows:

Step 300: Determine, from a hash function set, a hash function subset corresponding to each key value element group.

Step 310: For any key value element in each key value element group, calculate a hash value according to a hash function subset corresponding to a key value element group to which the key value element belongs, and set an element corresponding to a location that is of the calculated hash value and in a two-dimensional matrix to a second preset identifier.

Step 320: For a to-be-queried key value element, determine a hash function subset corresponding to a key value element group to which the to-be-queried key value element belongs, and calculate a hash value of the to-be-queried key value element according to the corresponding hash function subset.

Step 330: Acquire an element corresponding to a location that is of the hash value of the to-be-queried key value element and in the two-dimensional matrix.

Step 340: When the acquired element is a second preset identifier corresponding to the location that is of the hash value of the to-be-queried key value element and in the two-dimensional matrix, determine that the to-be-queried key value element belongs to a key value element set represented by the two-dimensional filter.

If hash function subsets corresponding to two different types of key value elements are the same, locations at which the key value elements are loaded into the two-dimensional filter are the same, and then different key value elements are corresponding to a same location in the two-dimensional filter. In this case, query accuracy is relatively low. In order to improve the query accuracy, in this embodiment of the present invention, hash functions included in hash function subsets respectively corresponding to any two different key value element groups are different; or

hash functions included in hash function subsets respectively corresponding to any two different key value element groups are the same, but the hash functions differ in an arrangement manner.

For example, a first key value element group is a sales chart related to regions, and a second key value element group is a sales chart related to months; then, a hash function subset corresponding to the first key value element group is different from a hash function subset corresponding to the second key value element group.

In this embodiment of the present invention, there are multiple manners for calculating the hash value of the to-be-queried key value element. Optionally, the following manner may be used:

obtaining a first hash value by performing calculation on a first sub key value element of the to-be-queried key value element based on the hash function subset corresponding to the key value element group to which the to-be-queried key value element belongs; and

obtaining a second hash value by performing calculation on a second sub key value element of the to-be-queried key value element based on the hash function subset corresponding to the key value element group to which the to-be-queried key value element belongs.

Certainly, the first sub key value element herein may also include a key value element formed by all odd bits of any key value element when the any key value element is represented in binary, and the second sub key value element includes a key value element formed by all even bits of any key value element when the any key value element is represented in binary; or

the first sub key value element includes a key value element formed by the $1^{st}$ bit to the $K^{th}$ bit of any key value element when the any key value element is represented in binary, and the second sub key value element includes a key value element formed by the $(K+1)^{th}$ bit to the $N^{th}$ bit of any key value element when the any key value element is represented in binary, where N is a quantity of bits of any key value element when the any key value element is represented in binary, $1 \leq K \leq N$, and K is a positive integer.

A specific representation form of the first sub key value element herein is the same as the representation form of the first sub key value element in Embodiment 1.

In this embodiment of the present invention, there are multiple manners for acquiring the element corresponding to the location that is of the hash value of the to-be-queried key value element and in the two-dimensional matrix. Optionally, the following manner may be used:

acquiring, from the two-dimensional matrix, an element that uses the first hash value as a row and uses the second hash value as a column; or acquiring, from the two-dimensional matrix, an element that uses the second hash value as a row and uses the first hash value as a column.

For example, a first sub key value element of any key value element is 90, and a second sub key value element of the any key value element is 140; a hash function subset corresponding to the any key value element is (h1, h2, h3); and first hash values obtained by performing calculation on 90 by using (h1, h2, h3) are respectively 6, 128, and 55, and second hash values obtained by performing calculation on 140 by using (h1, h2, h3) are respectively 0, 101, and 46. Then, locations that are of the any key value element and in the two-dimensional matrix are (6, 0), (6, 101), (6, 46), (128, 0), (128, 101), (128, 46), (55, 0), (55, 101), and (55, 46), and elements corresponding to these locations are all set to second preset identifiers; or locations that are of the any key value element and in the two-dimensional matrix are (0, 6), (101, 6), (46, 4), (0, 128), (101, 128), (46, 128), (0, 55), (101, 55), and (46, 55), and elements corresponding to these locations are all set to second preset identifiers.

In Embodiment 2, when it is queried whether a key value element is a key value element included in multiple key value element groups, it only needs to perform a query based on the two-dimensional filter, and it does not need to generate a Bloom filter corresponding to each key value element group. In addition, when it is queried whether a key value element is a key value element included in multiple key value element groups, it does not need to perform queries one by one based on each of multiple Bloom filters. Therefore, a problem of low query efficiency currently is further resolved.

In Embodiment 1 and Embodiment 2, a two-dimensional matrix is used as an example for description. Certainly, a multidimensional matrix such as a three-dimensional matrix and a four-dimensional matrix may also be used. A process of generating a multidimensional matrix is similar to a process of generating a two-dimensional matrix, and a query process based on a multidimensional matrix is similar to a query process based on a two-dimensional matrix; details are not described herein again.

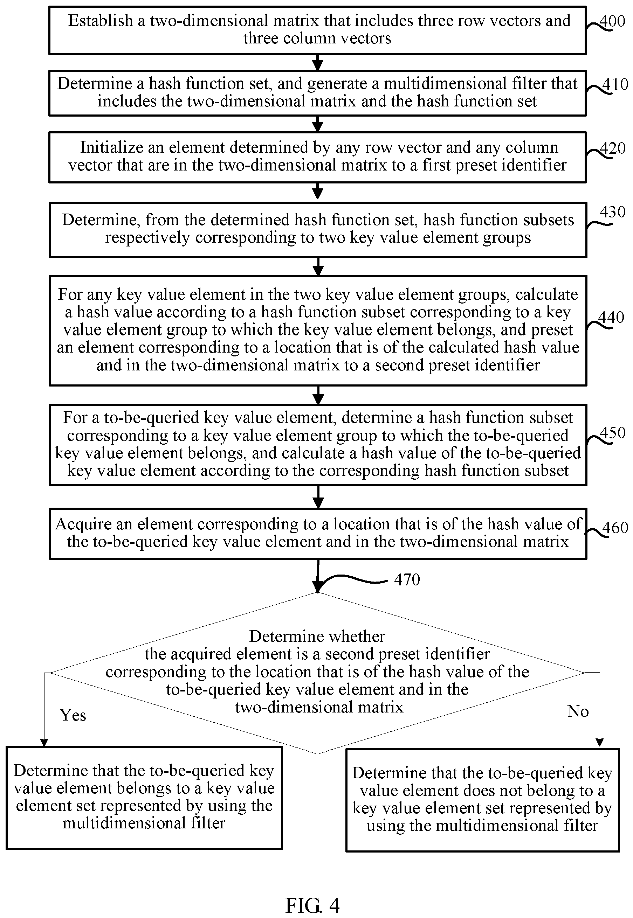

To better understand this embodiment of the present invention, the following provides a specific application scenario and further describes in detail the process of querying a key value element, as shown in FIG. 4.

**Embodiment 3**

Step 400: Establish a two-dimensional matrix that includes three row vectors and three column vectors.

Step 410: Determine a hash function set, and generate a two-dimensional filter that includes the two-dimensional matrix and the hash function set.

Each hash function in the hash function set is corresponding to at least one key value element group. A first hash value is obtained by performing hash calculation on a first sub key value element of any key value element in at least one corresponding key value element group by using any hash function in the hash function set, and a second hash value is obtained by performing hash calculation on a second sub key value element of any key value element in the corresponding key value element group, where each first hash value is a positive integer that is less than or equal to a length of the row vectors, and each second hash value is a positive integer that is less than or equal to a length of the column vectors.

In addition, the hash function set determined in this step includes 10 hash functions: h1, h2, h3, h4, h5, h6, h7, h8, h9, and h10.

Step 420: Initialize an element determined by any row vector and any column vector that are in the two-dimensional matrix to a first preset identifier.

Step 430: Determine, from the determined hash function set, hash function subsets respectively corresponding to two key value element groups.

Step 440: For any key value element in the two key value element groups, calculate a hash value according to a hash function subset corresponding to a key value element group to which the key value element belongs, and preset an element corresponding to a location that is of the calculated hash value and in the two-dimensional matrix to a second preset identifier.

Step 450: For a to-be-queried key value element, determine a hash function subset corresponding to a key value element group to which the to-be-queried key value element belongs, and calculate a hash value of the to-be-queried key value element according to the corresponding hash function subset.

Step 460: Acquire an element corresponding to a location that is of the hash value of the to-be-queried key value element and in the two-dimensional matrix.

Step 470: Determine whether the acquired element is a second preset identifier corresponding to the location that is of the hash value of the to-be-queried key value element and in the two-dimensional matrix, and if yes, determine that the to-be-queried key value element belongs to a key value element set represented by the two-dimensional filter; otherwise, determine that the to-be-queried key value element does not belong to a key value element set represented by the two-dimensional filter.

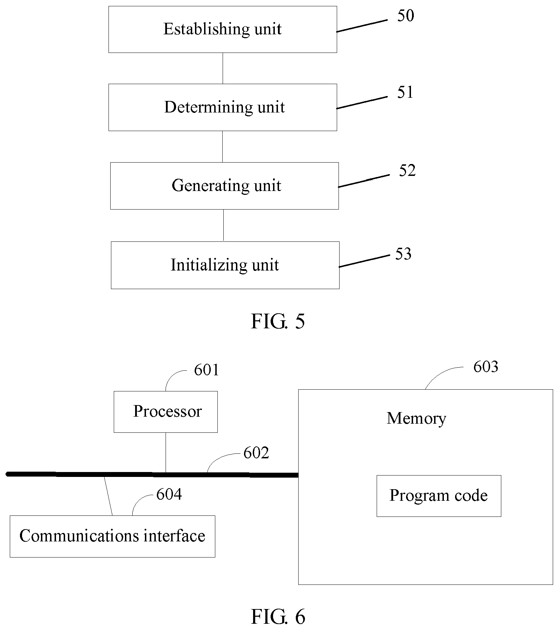

Based on the foregoing technical solutions, and referring to FIG. 5, this embodiment of the present invention provides an apparatus for generating a two-dimensional filter, where the generation apparatus includes an establishing unit 50, a determining unit 51, and a generating unit 52.

The establishing unit 50 is configured to establish a two-dimensional matrix that includes at least two row vectors and at least two column vectors.

The determining unit 51 is configured to determine a hash function set, where each hash function in the hash function set is corresponding to at least one key value element group; and obtain a first hash value by performing hash calculation on a first sub key value element of any key value element in at least one corresponding key value element group by using any hash function in the hash function set, and obtain a second hash value by performing hash calculation on a second sub key value element of any key value element in the corresponding key value element group, where each first hash value is a positive integer that is less than or equal to a length of the row vectors, and each second hash value is a positive integer that is less than or equal to a length of the column vectors.

The generating unit 52 is configured to generate a two-dimensional filter that includes the two-dimensional matrix and the hash function set.

In this embodiment of the present invention, optionally, both the length of the row vectors and the length of the column vectors are greater than or equal to

$$\sqrt{Sr},$$

where the row vectors and the column vectors are included in the two-dimensional matrix generated by the establishing unit 50.

Sr is a quantity of all key value elements included in all key value element groups; or Sr is a quantity of key value elements obtained after all key value elements included in all key value element groups are filtered by using a query condition.

In this embodiment of the present invention, optionally, the first sub key value element obtained by the determining unit 51 includes a key value element formed by all odd bits of any key value element when the any key value element is represented in binary, and the second sub key value element obtained by the determining unit 51 includes a key value element formed by all even bits of any key value element when the any key value element is represented in binary; or the first sub key value element obtained by the determining unit 51 includes a key value element formed by the 1st bit to the $K^{th}$ bit of any key value element when the any key value element is represented in binary, and the second sub key value element obtained by the determining unit 51 includes a key value element formed by the $(K+1)^{th}$ bit to the $N^{th}$ bit of any key value element when the any key value element is represented in binary, where N is a quantity of bits of any key value element when the any key value element is represented in binary, $1 \leq K \leq N$, and K is a positive integer.

In this embodiment of the present invention, the apparatus further includes an initializing unit 53, configured to initialize an element determined by any row vector and any column vector that are in the two-dimensional matrix to a first preset identifier.

As shown in FIG. 6, FIG. 6 is an entity apparatus diagram of an apparatus for generating a two-dimensional filter according to the present invention, where the apparatus for generating a two-dimensional filter includes at least one processor 601, a communications bus 602, a memory 603, and at least one communications interface 604.

The communications bus 602 is configured to implement connection and communication among the foregoing components, and the communications interface 604 is configured to connect to and communicate with an external device.

The memory 603 is configured to store program code that needs to be executed, and when executing the program code in the memory 603, the processor 601 implements the following functions:

establishing a two-dimensional matrix that includes at least two row vectors and at least two column vectors;

determining a hash function set, where each hash function in the hash function set is corresponding to at least one key value element group; and obtaining a first hash value by performing hash calculation on a first sub key value element of any key value element in at least one corresponding key value element group by using any hash function in the hash function set, and obtaining a second hash value by performing hash calculation on a second sub key value element of any key value element in the corresponding key value element group, where each first hash value is a positive integer that is less than or equal to a length of the row vectors, and each second hash value is a positive integer that is less than or equal to a length of the column vectors; and generating a two-dimensional filter that includes the two-dimensional matrix and the hash function set.

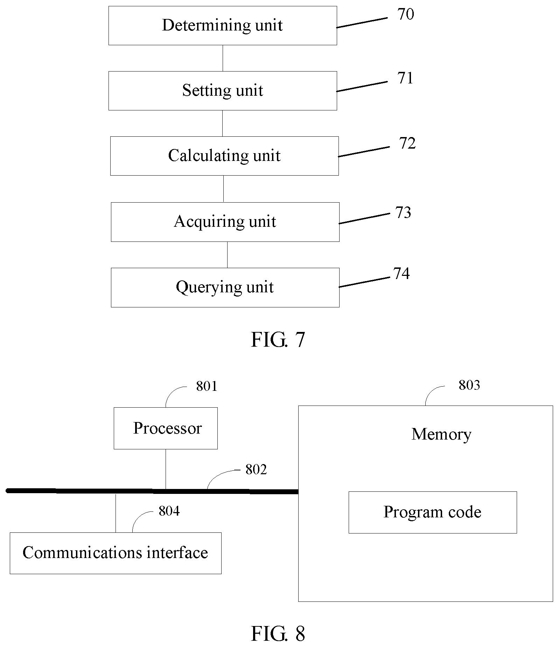

Based on the foregoing technical solutions, and referring to FIG. 7, this embodiment of the present invention provides an apparatus for querying a key value element, where the apparatus for querying a key value element includes a determining unit 70, a setting unit 71, a calculating unit 72, an acquiring unit 73, and a querying unit 74.

The determining unit 70 is configured to determine, from a hash function set, a hash function subset corresponding to each key value element group.

The setting unit 71 is configured to: for any key value element in each key value element group, calculate a hash value according to a hash function subset corresponding to a key value element group to which the key value element belongs, and set an element corresponding to a location that is of the calculated hash value and in a two-dimensional matrix to a second preset identifier.

The calculating unit 72 is configured to: for a to-be-queried key value element, determine a hash function subset corresponding to a key value element group to which the to-be-queried key value element belongs, and calculate a hash value of the to-be-queried key value element according to the corresponding hash function subset.

The acquiring unit 73 is configured to acquire an element corresponding to a location that is of the hash value of the to-be-queried key value element group and in the two-dimensional matrix.

The querying unit 74 is configured to: when the acquired element is a second preset identifier corresponding to the location that is of the hash value of the to-be-queried key value element and in the two-dimensional matrix, determine that the to-be-queried key value element belongs to a key value element set represented by a two-dimensional filter.

In this embodiment of the present invention, optionally, hash functions included in hash function subsets that are respectively corresponding to any two different key value element groups and determined by the determining unit 70 are different; or

hash functions included in hash function subsets that are respectively corresponding to any two different key value element groups and determined by the determining unit 70 are the same, but the hash functions differ in an arrangement manner.

In this embodiment of the present invention, optionally, the calculating unit 72 is specifically configured to:

> obtain a first hash value by performing calculation on a first sub key value element of the to-be-queried key value element based on the hash function subset corresponding to the key value element group to which the to-be-queried key value element belongs; and
> obtain a second hash value by performing calculation on a second sub key value element of the to-be-queried key value element based on the hash function subset corresponding to the key value element group to which the to-be-queried key value element belongs.

In this embodiment of the present invention, optionally, the acquiring unit 73 is specifically configured to:

> acquire, from the two-dimensional matrix, an element that uses the first hash value as a row and uses the second hash value as a column; or acquire, from the two-dimensional matrix, an element that uses the second hash value as a row and uses the first hash value as a column.

As shown in FIG. 8, FIG. 8 is an entity apparatus diagram of an apparatus for generating a two-dimensional filter according to the present invention, where the apparatus for generating a two-dimensional filter includes at least one processor 801, a communications bus 802, a memory 803, and at least one communications interface 804.

The communications bus 802 is configured to implement connection and communication among the foregoing components, and the communications interface 804 is configured to connect to and communicate with an external device.

The memory 803 is configured to store program code that needs to be executed, and when executing the program code in the memory 803, the processor 801 implements the following functions:

> determining, from a hash function set, a hash function subset corresponding to each key value element group;
> for any key value element in each key value element group, calculating a hash value according to a hash function subset corresponding to a key value element group to which the key value element belongs, and setting an element corresponding to a location that is of the calculated hash value and in a two-dimensional matrix to a second preset identifier;
> for a to-be-queried key value element, determining a hash function subset corresponding to a key value element group to which the to-be-queried key value element belongs, and calculating a hash value of the to-be-queried key value element according to the corresponding hash function subset;
> acquiring an element corresponding to a location that is of the hash value of the to-be-queried key value element and in the two-dimensional matrix; and
> when the acquired element is a second preset identifier corresponding to the location that is of the hash value of the to-be-queried key value element and in the two-dimensional matrix, determining that the to-be-queried key value element belongs to a key value element set represented by a two-dimensional filter.

In conclusion, in this embodiment of the present invention, a two-dimensional filter includes a two-dimensional matrix, where the two-dimensional matrix may be linked to multiple key value element groups, and therefore flexibility of the filter is improved.

Further, when it is queried whether a key value element is a key value element included in multiple key value element groups, it only needs to perform a query based on the two-dimensional filter, and it does not need to generate a Bloom filter corresponding to each key value element group. In addition, when it is queried whether a key value element is a key value element included in multiple key value element groups, it does not need to perform queries one by one based on each of multiple Bloom filters. Therefore, a problem of low query efficiency currently is further resolved.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some exemplary embodiments of the present invention have been described, persons skilled in the art can make changes and modifications to these embodiments once they learn the basic inventive concept. Therefore, the following claims are intended to be construed as to cover the exemplary embodiments and all changes and modifications falling within the scope of the present invention.

Obviously, persons skilled in the art can make various modifications and variations to the embodiments of the present invention without departing from the spirit and scope of the embodiments of the present invention. The present invention is intended to cover these modifications and variations provided that they fall within the scope of protection defined by the following claims and their equivalent technologies.

**Claims**

1. A method for querying a key value element, comprising:

   determining, from a hash function set, a hash function subset corresponding to each key value element group;

   for any key value element in each key value element group, calculating a hash value according to a hash function subset corresponding to a key value element group to which the key value element belongs, and setting an element corresponding to a location that is of the calculated hash value and in a two-dimensional matrix to a second preset identifier;

   for a to-be-queried key value element, determining a hash function subset corresponding to a key value element group to which the to-be-queried key value element belongs, and calculating a hash value of the to-be-queried key value element according to the corresponding hash function subset;

   acquiring an element corresponding to a location that is of the hash value of the to-be-queried key value element and in the two-dimensional matrix; and

   when the acquired element is a second preset identifier corresponding to the location that is of the hash value of the to-be-queried key value element and in the two-dimensional matrix, determining that the to-be-queried key value element belongs to a key value element set represented by a two-dimensional filter.

2. The method according to claim 1, wherein hash functions comprised in hash function subsets respectively corresponding to any two different key value element groups are different; or
   hash functions comprised in hash function subsets respectively corresponding to any two different key value element groups are the same, but the hash functions differ in an arrangement manner.

3. The method according to claim 1 or 2, wherein the calculating a hash value of the to-be-queried key value element specifically comprises:

   obtaining a first hash value by performing calculation on a first sub key value element of the to-be-queried key value element based on the hash function subset corresponding to the key value element group to which the to-be-queried key value element belongs; and
   obtaining a second hash value by performing calculation on a second sub key value element of the to-be-queried key value element based on the hash function subset corresponding to the key value element group to which the to-be-queried key value element belongs.

4. The method according to claim 3, wherein the acquiring an element corresponding to a location that is of the hash value of the to-be-queried key value element and in the two-dimensional matrix specifically comprises:

acquiring, from the two-dimensional matrix, an element that uses the first hash value as a row and uses the second hash value as a column; or acquiring, from the two-dimensional matrix, an element that uses the second hash value as a row and uses the first hash value as a column.

5. A method for generating a two-dimensional filter, comprising:

establishing a two-dimensional matrix that comprises at least two row vectors and at least two column vectors; determining a hash function set, wherein each hash function in the hash function set is corresponding to at least one key value element group; and obtaining a first hash value by performing hash calculation on a first sub key value element of any key value element in at least one corresponding key value element group by using any hash function in the hash function set, and obtaining a second hash value by performing hash calculation on a second sub key value element of the any key value element, wherein the first hash value is a positive integer that is less than or equal to a length of the row vectors, and the second hash value is a positive integer that is less than or equal to a length of the column vectors; and generating a two-dimensional filter that comprises the two-dimensional matrix and the hash function set.

6. The method according to claim 5, wherein both the length of the row vectors and the length of the column vectors are greater than or equal to $\sqrt{Sr}$, wherein

Sr is a quantity of all key value elements comprised in all key value element groups; or Sr is a quantity of key value elements obtained after all key value elements comprised in all key value element groups are filtered by using a query condition.

7. The method according to claim 5 or 6, wherein the first sub key value element comprises a key value element formed by all odd bits of the any key value element when the any key value element is represented in binary, and the second sub key value element comprises a key value element formed by all even bits of the any key value element when the any key value element is represented in binary; or the first sub key value element comprises a key value element formed by the 1st bit to the Kth bit of the any key value element when the any key value element is represented in binary, and the second sub key value element comprises a key value element formed by the (K+1)th bit to the Nth bit of the any key value element when the any key value element is represented in binary, wherein N is a quantity of bits of the any key value element when the any key value element is represented in binary, $1 \leq K \leq N$, and K is a positive integer.

8. The method according to any one of claims 5 to 7, further comprising:

initializing an element determined by any row vector and any column vector that are in the two-dimensional matrix to a first preset identifier.

9. An apparatus for querying a key value element, comprising:

a determining unit, configured to determine, from a hash function set, a hash function subset corresponding to each key value element group; a setting unit, configured to: for any key value element in each key value element group, calculate a hash value according to a hash function subset corresponding to a key value element group to which the key value element belongs, and set an element corresponding to a location that is of the calculated hash value and in a two-dimensional matrix to a second preset identifier; a calculating unit, configured to: for a to-be-queried key value element, determine a hash function subset corresponding to a key value element group to which the to-be-queried key value element belongs, and calculate a hash value of the to-be-queried key value element according to the corresponding hash function subset; an acquiring unit, configured to acquire an element corresponding to a location that is of the hash value of the to-be-queried key value element group and in the two-dimensional matrix; and a querying unit, configured to: when the acquired element is a second preset identifier corresponding to the location that is of the hash value of the to-be-queried key value element and in the two-dimensional matrix, determine that the to-be-queried key value element belongs to a key value element set represented by a two-dimensional filter.

10. The apparatus according to claim 9, wherein hash functions comprised in hash function subsets that are respectively corresponding to any two different key value element groups and determined by the determining unit are different; or hash functions comprised in hash function subsets that are respectively corresponding to any two different key value element groups and determined by the determining unit are the same, but the hash functions differ in an arrangement manner.

**11.** The apparatus according to claim 9 or 10, wherein the calculating unit is specifically configured to:

obtain a first hash value by performing calculation on a first sub key value element of the to-be-queried key value element based on the hash function subset corresponding to the key value element group to which the to-be-queried key value element belongs; and

obtain a second hash value by performing calculation on a second sub key value element of the to-be-queried key value element based on the hash function subset corresponding to the key value element group to which the to-be-queried key value element belongs.

**12.** The apparatus according to claim 11, wherein the acquiring unit is specifically configured to:

acquire, from the two-dimensional matrix, an element that uses the first hash value as a row and uses the second hash value as a column; or acquire, from the two-dimensional matrix, an element that uses the second hash value as a row and uses the first hash value as a column.

**13.** An apparatus for generating a two-dimensional filter, comprising:

an establishing unit, configured to establish a two-dimensional matrix that comprises at least two row vectors and at least two column vectors; a determining unit, configured to determine a hash function set, wherein each hash function in the hash function set is corresponding to at least one key value element group; and obtain a first hash value by performing hash calculation on a first sub key value element of any key value element in at least one corresponding key value element group by using any hash function in the hash function set, and obtain a second hash value by performing hash calculation on a second sub key value element of the any key value element, wherein the first hash value is a positive integer that is less than or equal to a length of the row vectors, and the second hash value is a positive integer that is less than or equal to a length of the column vectors; and a generating unit, configured to generate a two-dimensional filter that comprises the two-dimensional matrix and the hash function set.

**14.** The apparatus according to claim 13, wherein both the length of the row vectors and the length of the column vectors are greater than or equal to $\sqrt{Sr}$,

wherein the row vectors and the column vectors are comprised in the two-dimensional matrix generated by the establishing unit; wherein

Sr is a quantity of all key value elements comprised in all key value element groups; or Sr is a quantity of key value elements obtained after all key value elements comprised in all key value element groups are filtered by using a query condition.

**15.** The apparatus according to claim 13 or 14, wherein the first sub key value element obtained by the determining unit comprises a key value element formed by all odd bits of the any key value element when the any key value element is represented in binary, and the second sub key value element obtained by the determining unit comprises a key value element formed by all even bits of the any key value element when the any key value element is represented in binary; or

the first sub key value element obtained by the determining unit comprises a key value element formed by the 1st bit to the Kth bit of the any key value element when the any key value element is represented in binary, and the second sub key value element obtained by the determining unit comprises a key value element formed by the (K+1)th bit to the Nth bit of the any key value element when the any key value element is represented in binary, wherein N is a quantity of bits of the any key value element when the any key value element is represented in binary, $1 \le K \le N$, and K is a positive integer.

**16.** The apparatus according to any one of claims 13 to 15, further comprising:

an initializing unit, configured to initialize an element determined by any row vector and any column vector that are in the two-dimensional matrix to a first preset identifier.

```
H1  ───►  A1  ──►  A2   ......
H2
H3 ──────►  A3  ──►  A4   ......
H4
    ──────►  A5  ──►  A6   ......
......
    ──────►  A7  ──►  A8   ......
```

## FIG. 1A

```
        XXX@163.com

   F1    F2    ......    F8

   f1    f2    ......    f8

| 1 | 0 | 1 | 0 | 0 | 0 | 1 | 0 | 0 | 1 | 0 | 0 | 0 | 0 | 1 | 0 | 0 |
```

## FIG. 1B

| | |
|---|---|
| Establish a two-dimensional matrix that includes at least two row vectors and at least two column vectors | 200 |
| Determine a hash function set, where each hash function in the hash function set is corresponding to at least one key value element group; and obtain a first hash value by performing hash calculation on a first sub key value element of any key value element in at least one corresponding key value element group by using any hash function in the hash function set, and obtain a second hash value by performing hash calculation on a second sub key value element of any key value element in the corresponding key value element group, where each first hash value is a positive integer that is less than or equal to a length of the row vectors, and each second hash value is a positive integer that is less than or equal to a length of the column vectors | 210 |
| Generate a multidimensional filter that includes the two-dimensional matrix and the hash function set | 220 |

## FIG. 2A

Row vector

Column vector

FIG. 2B

| Determine, from a hash function set, a hash function subset separately corresponding to each key value element group | 300 |

| For any key value element in each key value element group, calculate a hash value according to a hash function subset corresponding to a key value element group to which the key value element belongs, and set an element corresponding to a location that is of the calculated hash value and in a two-dimensional matrix to a second preset identifier | 310 |

| For a to-be-queried key value element, determine a hash function subset corresponding to a key value element group to which the to-be-queried key value element belongs, and calculate a hash value of the to-be-queried key value element according to the corresponding hash function subset | 320 |

| Acquire an element corresponding to a location that is of the hash value of the to-be-queried key value element and in the two-dimensional matrix | 330 |

| When the acquired element is a second preset identifier corresponding to the location that is of the hash value of the to-be-queried key value element and in the two-dimensional matrix, determine that the to-be-queried key value element belongs to a key value element set represented by using a multidimensional filter | 340 |

FIG. 3

| Establish a two-dimensional matrix that includes three row vectors and three column vectors | 400 |

| Determine a hash function set, and generate a multidimensional filter that includes the two-dimensional matrix and the hash function set | 410 |

| Initialize an element determined by any row vector and any column vector that are in the two-dimensional matrix to a first preset identifier | 420 |

| Determine, from the determined hash function set, hash function subsets respectively corresponding to two key value element groups | 430 |

| For any key value element in the two key value element groups, calculate a hash value according to a hash function subset corresponding to a key value element group to which the key value element belongs, and preset an element corresponding to a location that is of the calculated hash value and in the two-dimensional matrix to a second preset identifier | 440 |

| For a to-be-queried key value element, determine a hash function subset corresponding to a key value element group to which the to-be-queried key value element belongs, and calculate a hash value of the to-be-queried key value element according to the corresponding hash function subset | 450 |

| Acquire an element corresponding to a location that is of the hash value of the to-be-queried key value element and in the two-dimensional matrix | 460 |

470

Determine whether the acquired element is a second preset identifier corresponding to the location that is of the hash value of the to-be-queried key value element and in the two-dimensional matrix

Yes / No

| Determine that the to-be-queried key value element belongs to a key value element set represented by using the multidimensional filter | | Determine that the to-be-queried key value element does not belong to a key value element set represented by using the multidimensional filter |

FIG. 4

| Establishing unit | — 50 |

| Determining unit | — 51 |

| Generating unit | — 52 |

| Initializing unit | — 53 |

FIG. 5

601
Processor

603
Memory

602

604
Communications interface

Program code

FIG. 6

| Determining unit | — 70 |

| Setting unit | — 71 |

| Calculating unit | — 72 |

| Acquiring unit | — 73 |

| Querying unit | — 74 |

FIG. 7

801

Processor

803

Memory

802

Program code

804

Communications interface

FIG. 8

| INTERNATIONAL SEARCH REPORT | International application No. |
|---|---|
| | PCT/CN2015/072915 |

**A. CLASSIFICATION OF SUBJECT MATTER**

G06F 17/30 (2006.01) i
According to International Patent Classification (IPC) or to both national classification and IPC

**B. FIELDS SEARCHED**

Minimum documentation searched (classification system followed by classification symbols)

G06F; H04L

Documentation searched other than minimum documentation to the extent that such documents are included in the fields searched

Electronic data base consulted during the international search (name of data base and, where practicable, search terms used)

CNPAT, CNKI, WPI, EPODOC, GOOGLE: multi-dimensional, high dimensional, matrix, key value, sub-key value, hash function, hash value, bloom, filter, hash, function, value, multi, two, dimensional, inquiry, preset

**C. DOCUMENTS CONSIDERED TO BE RELEVANT**

| Category* | Citation of document, with indication, where appropriate, of the relevant passages | Relevant to claim No. |
|---|---|---|
| X | LIU, Wei et al., "Pattern Matching Engine Based on Multi-Dimensional Bloom Filters", JOURNAL OF COMPUTER APPLICATIONS, vol. 31, no. 1, 31 January 2011 (31.01.2011), ISSN: 1001-9081, pages 107-109, and figures 3 and 4 | 1-16 |
| PX | CN 104317795 A (HUAWEI TECHNOLOGIES CO., LTD.), 28 January 2015 (28.01.2015), claims 1-16 | 1-16 |
| A | CN 101567815 A (TSINGHUA UNIVERSITY), 28 October 2009 (28.10.2009), the whole document | 1-16 |
| A | CN 101398820 A (BEIJING VENUSTECH INC.), 01 April 2009 (01.04.2009), the whole document | 1-16 |
| A | US 2007130188 A1 (MOON, H.S. et al.), 07 June 2007 (07.06.2007), the whole document | 1-16 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 30 April 2015 (30.04.2015) | **03 June 2015 (03.06.2015)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **JIANG, Lingling** Telephone No.: (86-10) **61648109** |

Form PCT/ISA/210 (second sheet) (July 2009)

## INTERNATIONAL SEARCH REPORT
### Information on patent family members

International application No.

**PCT/CN2015/072915**

| Patent Documents referred in the Report | Publication Date | Patent Family | Publication Date |
|---|---|---|---|
| CN 104317795 A | 28 January 2015 | None | |
| CN 101567815 A | 28 October 2009 | None | |
| CN 101398820 A | 01 April 2009 | None | |
| US 2007130188 A1 | 07 June 2007 | KR 20070059888 A | 12 June 2007 |

Form PCT/ISA/210 (patent family annex) (July 2009)